# EUROPÄISCHE PATENTSCHRIFT

(11) **EP 1 055 090 B1**
(45) Veröffentlichungstag und Bekanntmachung des Hinweises auf die Patenterteilung: **07.01.2004**
(21) Anmeldenummer: 99910115.7
(22) Anmeldetag: 03.02.1999
(51) Int. Cl.: F27D 3/00

(54) **BESCHICKUNGSEINRICHTUNG FÜR NIEDERSCHACHTÖFEN**
CHARGING DEVICE FOR LOW BLAST FURNACES
UNITE DE CHARGEMENT POUR BAS FOURNEAUX

(30) Priorität: 13.02.1998 DE 19807616
(43) Veröffentlichungstag der Anmeldung: 29.11.2000
(73) Patentinhaber: SMS Demag AG, 40237 Düsseldorf (DE)
(72) Erfinder: BECKER, Lutz, D-47228 Duisburg (DE); RUPIETTA, Bertram, D-46147 Oberhausen (DE)
(74) Vertreter: Meissner, Peter E., Dipl.-Ing.
(86) Internationale Anmeldenummer: PCT/DE1999/000334
(87) Internationale Veröffentlichungsnummer: WO 1999/041561

(56) Entgegenhaltungen:
- WO-A-96/32616
- WO-A-98/46965
- WO-A-98/53106
- US-A- 4 619 693
- US-A- 4 736 383
- US-A- 5 390 212

## Beschreibung

Die Erfindung betrifft eine Beschickungseinrichtung für Niederschachtöfen, insbesondere für Lichtbogenöfen zum Erschmelzen von Schrott, die mit einem an eine Gasabzugseinrichtung angeschlossenen Deckel verschließbar sind, und auf denen nach Entfernen des Deckels vom Ofenschacht eine Chargiervorrichtung aufsetzbar ist.

Aus EP 0 385 434 B1 ist ein Einschmelzaggregat mit einem Lichtbogenofen bekannt, der ein Ofengefäß aus einem Ofenherd und einer Gefäßwand sowie einen Gefäßdeckel enthält, bei dem seitlich am Ofengefäß ein schachtförmiger Chargiergutvorwärmer angeordnet ist, wobei auf einem neben dem Chargiergutvorwärmer angeordneten verfahrbaren Portal eine Hubvorrichtung befestigt ist, die wenigstens ein heb- und senkbares Tragglied enthält, das am Rand des Deckels angreift. Das verfahrbare Portal ist als Drehportal ausgebildet.

Aus DE 40 15 916 A1 ist ein Einschmelzaggregat mit zwei nebeneinander angeordneten Schmelzöfen bekannt, wobei jedem Ofen ein Schacht zugeordnet ist, der in Draufsicht nahezu rechteckig ausgebildet ist und nach unten einen erweiternden Innenraum aufweist. Dieser Schacht ist mittels eines Deckels verschließbar und dabei, z.B. auf Schienen, horizontal verschiebbar. Im geöffneten Zustand des Schachtes kann Einsatzmaterial mittels eines Chargiergutbehältes in den Schacht chargiert werden.

Weiterhin ist aus DE 196 26 389 ein Lichtbogenofen bekannt, bei dem von einer Seite des Ofengefäßes her zugänglich, thermisch vom Ofeninnenraum abgeschirmt ein Elektrodenaufnahmeraum vorgesehen ist mit wenigstens einer zum Ofeninnenraum weisenden Durchtrittsöffnung für die Elektrode. Das Ofengefäß kann dabei aus einem Unterteil und einem Oberteil zusammengesetzt sein, wobei das Oberteil dann die den Elektrodenaufnahmeraum ausbildende Einbuchtung aufweist. Der untere Abschluß der Ausbuchtung ist hierbei mit einer Bodenplatte versehen, die eine Durchtrittsöffnung für die Elektrode aufweist.

US-A-5390212 beschreibt eine Beschickungseinrichtung für einen Elektrolichtbogenofen mit einer Schrottvorwärm- und -chargiervorrichtung, deren oberer Abschnitt als Chargierbehälter mit einem gasdurchlässigen öffenbaren Boden ausgebildet ist. An den oberen Abschnitt schließt ein unterer Abschnitt des Chargierbehälters an, dessen Form der Form des oberen Randes des Ofengefäßes angepaßt ist. Der Chargierbehälter kann durch Absetzen auf das geöffnete Ofengefäß in eine Stellung gebracht werden, in der der darin vorgewärmte Schrott in das Ofengefäß chargiert werden kann. Durch Absetzen des Chargierbehälters auf eine neben dem Ofengefäß befindliche Ablage kann der Chargierbehälter in eine seitlich verschobene Stellung gebracht werden, in der ein durch den Ofendeckel geführtes Gasabzugsrohr mit einem Gaszuführrohr der Schrottvorwärm- und -chargiervorrichtung verbunden ist; der in den Chargierbehälter gefüllte kalte Schrott wird vom durchströmenden Ofenabgas erhitzt; eine Schwenkvorrichtung bringt den Chargierbehälter in die erwähnten beiden auf etwa gleichem Höhenniveau befindlichen Stellungen; auf der Schwenkeinrichtung befindet sich eine Hubeinrichtung, mittels der der Chargierbehälter in eine höhere Verschiebestellung und etwas niedrigere Dichtstellungen auf dem Ofengefäß bzw. der Ablage bewegt werden kann.

Zum Füllen des Chargierbehälters sind bei den oben genannten Einrichtungen die Materialzuführelemente bis oberhalb des Randes des Chargierschachtes zu führen. Soweit hier ein von einem Kran bewegter Schrottkorb zum Einsatz kommt, ist eine entsprechende Bauhöhe für die Kranbahn sowie der Halle vorzusehen. Die Erfindung hat sich das Ziel gesetzt, eine Beschickung seinrichtung für Niederschachtöfen, insbesondere für Lichtbogenöfen, zu schaffen, die eine nur geringe Hallenhöhe erfordert und bei der mit einfacher, wartungsarmer Konstruktion betriebssicher, mit einfacher Führung des Algases aus dem Niederschachtofen und mit geringen Energieverlusten sowie unter weitestgehender Ausnutzung der vorhandenen Wärmeenergien ein gleichmäßiges Verteilen der Charge im Ofenschacht möglich ist.

Das ältere, jedoch nicht vorveröffentlichte Dokument WO-A-98 531 06 nach Art. 54(3) EPÜ beschreibt eine Beschickungseinrichtung mit einer ähnlichen Funktion. Die Ablage für den in der Vorwärmposition befindlichen Chargierbehälter befindet sich hier deutlich unter dem oberen Rand des geöffneten Ofengefäßes.

Die Erfindung erreicht dieses Ziel durch die Merkmale des Anspruchs 1. Die übrigen Ansprüche sind vorteilhafte Weiterbildungen der Erfindung.

Erfindungsgemäß wird eine Beschickungseinrichtung vorgeschlagen, die aus einer Chargiervorrichtung besteht, welche neben dem Niederschachtofen auf einer Ablage absetzbar ist und über Bewegungsvorrichtungen, insbesondere Schwenk- und Hebevorrichtung, auf dem Ofenschacht absetzbar ist. Die Chargiervorrichtung ist während der Phase, in der der Lichtbogenofen in Betrieb ist, nahezu beliebig absetzbar, sodaß die Materialzufuhreinrichtung für den Chargierbehälter in der Stahlwerkshalle so niedrig wie möglich angeordnet werden kann. Zum Chargieren des Niederschachtofens wird die Chargiervorrichtung von der Ruheposition angehoben und in ihre Füllposition gebracht, wobei sie gerade soweit oberhalb des Schachtes des Niederschachtofens gehalten wird, daß die jeweiligen Mündungen sich nicht berühren, aber gleichzeitig möglichst wenig Abgase aus dem Ofenschacht in die Atmosphäre gelangen.

In der Ruheposition ist die Chargiervorrichtung an den Rauchgasabzug des Niederschachtofens angeschlossen und dient somit als Vorwärmstation. Der Schrott wird in der Vorwärmkammer von oben her von den heißen Gasen durchströmt.
In vorteilhafter Weise wird durch diese Strömungsrichtung des Gases die Schrottrückhaltevorrichtung weitgehenst vor thermische Überlastung geschützt. Die Ablage ist dabei als Nachbrennkammer ausgebildet.

Erfindungsgemäß sind also der Niederschachtofen und der Schrottvorwärmer unabhängig voneinander angeordnet. Nach dem Wegschwenken der Chargiervorrichtung vom Ofen wird dieser, insbesondere bei einer eventuellen Störung des Schrottvorwärmers, als normaler Lichtbogenofen betrieben.

Die Chargiervorrichtung weist ein Ober- und ein Unterteil auf. Das Oberteil besitzt eine rechteckige Gestalt und ist an ihrem der Ablage bzw. dem Ofen zugewandten Ende durch bewegbare Elemente verschließbar. Im geschlossenen Zustand ist der so gebildete Boden gasdurchlässig und dabei so ausgestaltet, daß keine Charge durchfällt. In einer vorteilhaften Ausgestaltung sind einarmige Hebel vorgesehen, die schwenkbar an Wellen befestigt sind.

Zur Dämpfung der kinetischen Energie der Charge beim Befüllen des Chargierbehältes können Dämpfungselemente vorgesehen sein, auf denen sich die Spitzen der schwenkbaren Hebel während der Füllphase abstützen. In einer vorteilhaften Ausgestaltung sind diese Dämpfungselemente aus einem Federelement und einem schwenkbaren Arm aufgebaut.

Das Unterteil der Chargiervorrichtung besitzt im Mündungsbereich eine Form, die mit dem oberen Rand des Schachtes des Niederschachtofens korrespondiert. Der obere Rand der Ablage ist in seiner Form dieser Ausgestaltung angepaßt.

In einer anderen vorteilhaften Ausgestaltung ist der gasdurchlässige Boden aus Stäben gebildet, die durch die seitliche Wand des Chargierbehälters gesteckt sind und durch diese hineindrückbar bzw. herausziehbar sind. Zur Dämpfung der Aufschlagenergie während des Befüllens kann die freie Öffnung der Ablage durch ein Gitter abgedeckt sein, auf das sich die Stäbe abstützen.

Soweit der gasdurchlässige Boden aus Stäben besteht, besitzt die Chargiervorrichtung eine relativ geringe Bauhöhe und ist dabei, mit Ausnahme ihres unteren deckelförmigen Randes, rechteckig ausgebildet.
Die Chargiervorrichtung wird von einer Hebevorrichtung von ihrer Ablage in eine Höhe oberhalb des Randes des Niederschachtofens gehoben. Um in eine Position dicht oberhalb des Schachtes bewegt zu werden, wird eine Fahr- oder eine Schwenkvorrichtung eingesetzt. Soweit eine Schwenkvorrichtung zum Einsatz kommt, wird in einer vorteilhaften Ausgestaltung eine zentrale Säule eingesetzt, die Elemente zum Heben und Schwenken beinhaltet.

In einer weiteren besonderen Ausgestaltung ist an der Schwenkvorrichtung ein gabelförmiges Element vorgesehen, auf dem mindestens drei Hebeelemente, vorzugsweise hydraulische Kolben-Zylinder-Einheiten, angeordnet sind, mit denen die Hebebewegung funktional getrennt ist von der Schwenkbewegung.

Eine weitere Trennung der Funktion Heben und Bewegen ist in einer Ausgestaltung ausgeführt, in denen Fahrantriebe eingesetzt werden, und zwar ein horizontaler zum Hin- und Wegbewegen des Chargierbehälters zwischen dem Niederschachtofen und der Ablage und ein vertikaler zum Heben und Senken von dem niedrigen Niveau der Ablage zu dem höheren Niveau oberhalb des Schachtes des Niederschachtofens. Außer während der kurzen Phase,in der der Chargierbehälter bewegt wird, sind sowohl der Ofen wie der Chargierbehälter mit der Gasabzugseinrichtung in Verbindung. Soweit eine Schwenkeinrichtung zum Einsatz kommt, ist an ihrer Kopfseite mindestens ein Gasleitungsstück vorgesehen, welches im rechten Winkel geführt ist und in Stellungen bringbar, bei denen der Niederschachtofen mit dem Chargierbehälter oder mit der Gasabzugseinrichtung verbindbar ist oder auch kein Anschluß besteht.

Ein Beispiel der Erfindung ist in der beiliegenden Zeichnung dargelegt. Dabei zeigen:
- Figur 1: eine Übersicht der Anordnung Niederschachtofen und Chargiervorrichtung,
- Figur 2: eine Chargiervorrichtung mit einer Hebe- und Schwenkvorrichtung,
- Figur 3: eine Chargiervorrichtung mit einer Schwenkvorrichtung, auf der separat eine Hebevorrichtung angeordnet ist,
- Figur 4: Draufsicht auf eine Schwenkvorrichtung mit Leitungsteilen der Gasführung während der Betriebsphase,
- Figur 5: Draufsicht auf die Ofen- und Beschickungseinrichtung während des Chargierens,
- Figur 6: Niederschachtofen mit geschwenktem Deckel und Chargierbehälter mit Fahreinrichtung zum Bewegen und Heben während der Füllphase.

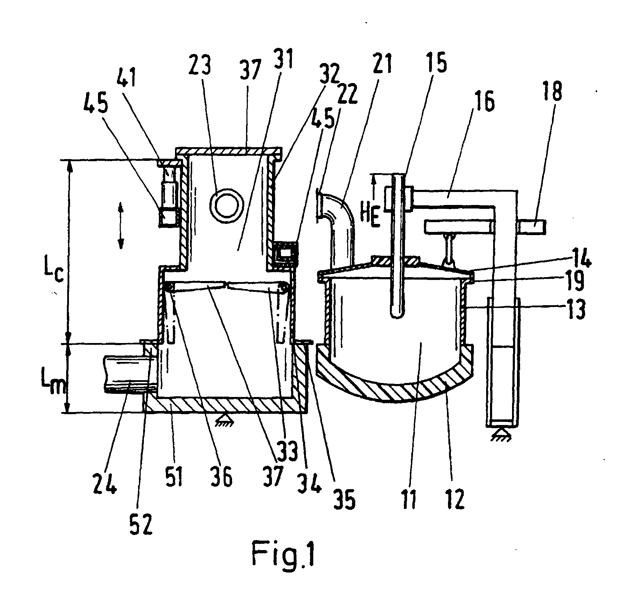

Die Figur 1 zeigt einen Niederschachtofen 11, der aus einem Untergefäß 12 und einem Obergefäß 13 aufgebaut ist und durch einen Deckel 14 verschließbar ist. Durch den Deckel 14 ragt in das Obergefäß 13 hinein eine Elektrode 15, die an einem Elektrodenarm 16 befestigt ist, welcher durch eine Elektrodensäule heb- und schwenkbar ist.

Der Deckel 14 ist an einer Deckelhebe- und -schwenkvorrichtung 18 befestigt. Weiterhin ist am Deckel 14 ein Abzugsrohr 21 angeordnet, welches kopfseitig eine Schiebemuffe 22 besitzt.

Unabhängig vom Ofen 11 ist eine Ablage 51 vorgesehen, an der ein Anschluß 24 angeordnet ist, der mit einer nicht weiter dargestellten Gasabzugseinrichtung 29 in Verbindung steht.

Auf dem Rand 52 der Ablage 51 ist eine Chargiervorrichtung 31 mit ihrer Mündung 35 ihres Unterteils 34 abgesetzt. Das Unterteil 34 ist mit einem Oberteil 32 verbunden, welches durch einen Deckel 37 gasdicht verschließbar ist. Weiterhin weist das Oberteil 32 des Chargierbehälters 31 ein Zuführrohr 23 auf, welches mit dem Abzugsrohr 21 am Ofendeckel 14 in Verbindung bringbar ist.

Die Mündung des Oberteils 32 ist durch verstellbare, einarmige Hebel 37 verschließbar, die durch Wellen 36 schwenkbar sind und den Boden 33 des Chargierbehälters bilden.

Am Chargierbehälter 31 greifen gabelförmige Elemente 45 an, mit denen dieser bewegt werden kann. Auf der linken Seite des in Figur 1 dargestellten Chargierbehälters ist zwischen dem gabelförmigen Element 45 und dem Oberteil der Chargiervorrichtung 31 eine Hebevorrichtung 41 angeordnet.

Wird die Gesamthöhe des Niederschachtofens mit H_{E}, also die lichte Weite, die beispielsweise von einem Kran gefahren werden kann, bezeichnet, so läßt sich die Chargiervorrichtung mit seiner Gesamthöhe L_{c} auf einer Ablage 51 ablegen, die selber eine Mantellänge Lₘ besitzt und dann in dieser Höhe innerhalb der Stahlwerkshalle angeordnet werden kann.

Wird ein Überfahren des Krans mit anhängendem Schrottkorb über den geschlossenen Lichtbogenofen untersagt, so kann diese Höhe auf die Gesamthöhe des Schachtes H_{S} vermindert werden.

Im letztgenannten Fall kann sowohl der Schrottkorb extrem tief in der Stahlwerkshalle geführt werden und dem Lichtbogenofen direkt oder - bei Normalbetrieb - die Chargiervorrichtung füllen. Die Unterkante der Chargiervorrichtung ist dabei gerade so weit anzuheben, daß sie mit ihrer Mündung oberhalb der Schachtmündung gehalten werden kann.

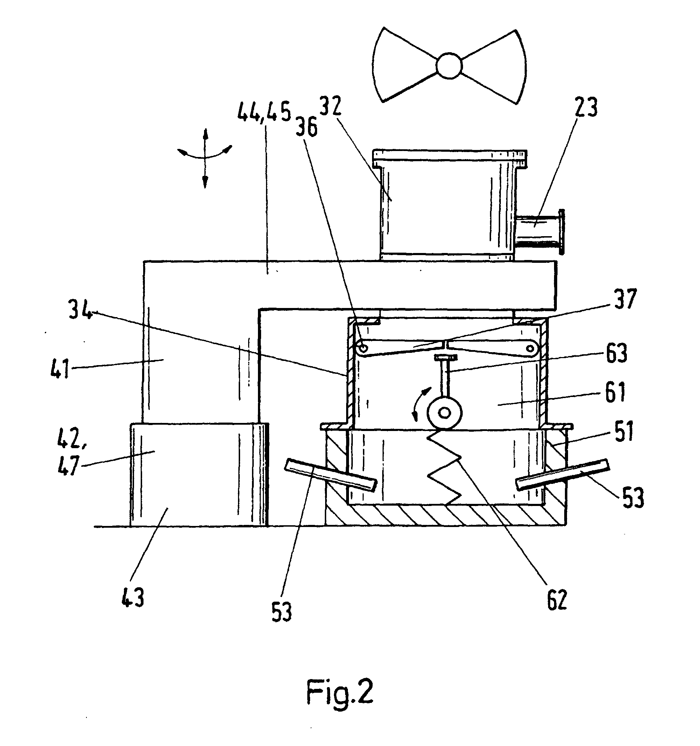

Die Figur 2 zeigt eine Bewegungsvorrichtung 42, die eine zentrale Säule 43 aufweist und als Schwenkvorrichtung 47 und gleichzeitig als Hebevorrichtung 41 ausgestaltet ist. Die Bewegungsvorrichtung 42 besitzt Greifelemente 44, die als gabelförmiges Element 45 ausgestaltet sind und das Oberteil 32 der Chargiervorrichtung 31 greifen. Das Oberteil 32 besitzt in seiner Seitenwandung ein Zuführrohr 23.

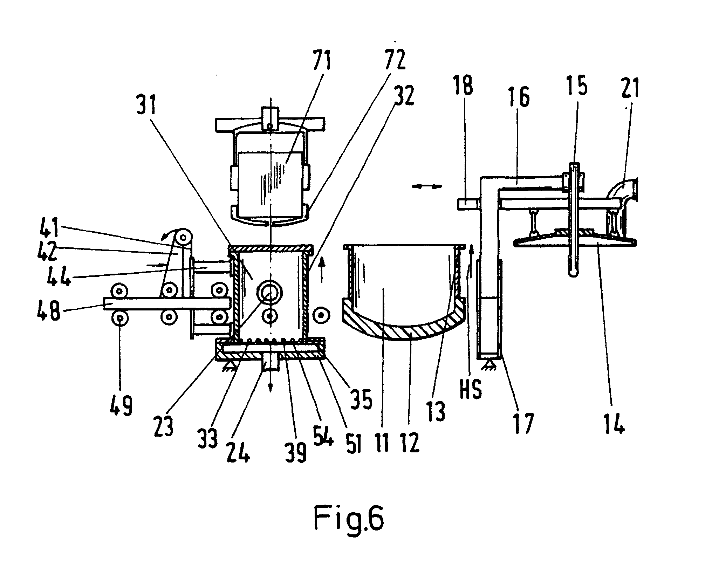

In der Figur 2 wird der Chargierbehälter von einem Schrottkorb 71, der eine Bodenklappe 72 besitzt, gefüllt (Figur 6). Während des Befüllvorganges ist der Übergang vom Oberteil 32 zum Unterteil 34 durch einarmige Hebel geschlossen. Die Hebel 37 sind um Wellen 36 schwenkbar und stützen sich während des Füllvorganges auf einem Dämpfungselement 61 ab. Dieses Dämpfungselement 61 besteht im vorliegenden Fall aus einem klappbaren Arm 63, und einer Feder 62.

Die Mündung des Unterteils 34 ist auf einer Ablage 51 abgesetzt.
In den Freiraum der Ablage 51 ragen Lanzen 53, durch die Gase zuführbar sind, soweit dieser Raum als Nachbrennkammer Verwendung findet.

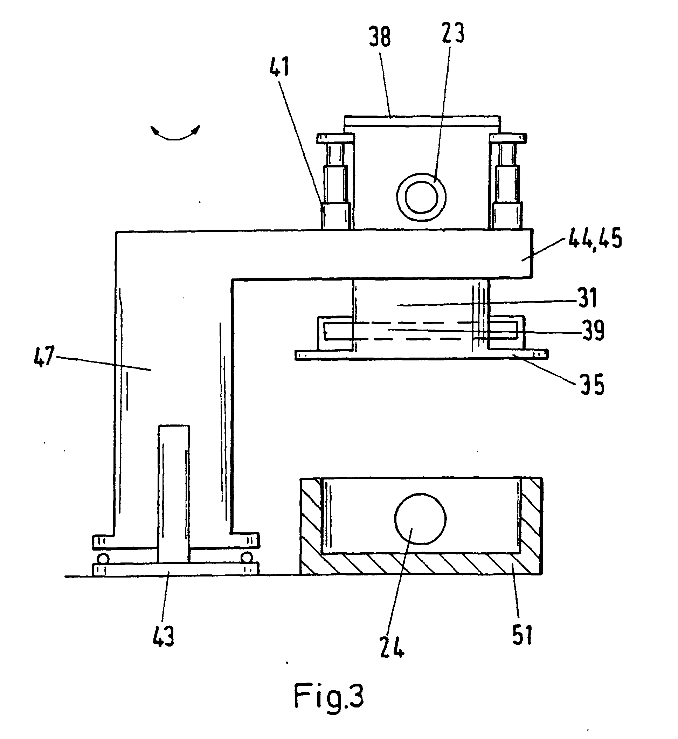

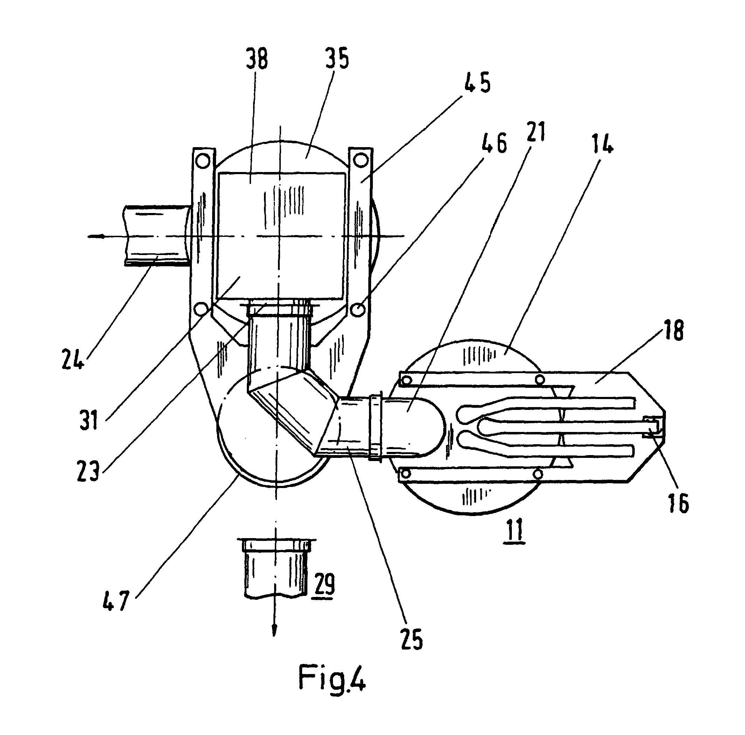

Die Figur 3 zeigt eine zentrale Säule 43, die als Schwenkvorrichtung 47 ausgestaltet ist und Greifelemente 44 besitzt, die die Form eines gabelförmigen Elementes 45 (vgl. dazu die nachfolgende Figur 4) aufweisen. Auf dem gabelförmigen Element 45 sind Hebevorrichtungen, hier teleskopförmige Hydraulikbauteile, vorgesehen, mit denen die Chargiervorrichtung heb- und senkbar ist.

Die Chargiervorrichtung 31 ist durch einen Deckel 38 nach oben hin gasdicht verschlossen. In der Seitenwand der Chargiervorrichtung 31 ist ein Zuführrohr 23 angeordnet.

An der Mündung des Chargierbehälters 31 sind dicht oberhalb des Mündungsbereiches 35 stangenförmige Elemente 39 vorgesehen, die in den Chargierbehälter hinein- und aus diesem herausbewegbar sind und auf den sich die Charge während der Vorwärmphase und während des Transportes abstützt.

In der Figur 3 ist der Chargierbehälter von der Ablage 51 abgehoben. Im Freiraum der Ablage 51 ist der Anschluß 24 dargestellt.

Die Figur 4 zeigt eine Draufsicht auf die Gesamtanlage. Im rechten Teil des Bildes ist der Niederschachtofen 11 dargestellt, der durch den Deckel 14 verschlossen ist und über den Elektrodentragarm 16 und die Deckelhebe- und -schwenkvorrichtung 18 ragt.

Am Deckel 14 ist das Abzugsrohr 21 angeordnet, das mit einem rechtwinkligem Leitungsstück 25 korrespondiert, welches an der Schwenkvorrichtung 47 befestigt ist und anderenends zum Zuführrohr 23 des Chargierbehälters 31 führt. An der Schwenkvorrichtung 47 ist das gabelförmige Element 45 befestigt, an dem Hebeelemente 46 angeordnet sind. Die Chargiervorrichtung 31 ist in ihrem oberen Bereich rechteckig ausgestaltet und durch einen Deckel 38 verschlossen. Der Mündungsbereich 35 der Chargiervorrichtung 31 ist der Ofenform 11 angepaßt, im vorliegenden Fall besitzt sie eine kreisrunde Form.

Nicht sichtbar ist in der vorliegenden Figur die Ablage 51, von der der Anschluß 24 wegführt.

Weiterhin ist der Anschluß der Gasabzugseinrichtung 29 aufgezeigt.

Die Figur 4 zeigt eine einzige Ablageposition des Chargierbehälters 31. Selbstverständlich sind durch die Möglichkeit einer 360°-Schwenkung der Schwenkvorrichtung 47 beliebige Positionen möglich.

In der dargestellten Anordnung des Ofens 11 und der Chargiervorrichtung 31 zeigt die Position, bei der der Ofen in Betrieb ist und die Abgase über den Chargierbehälter durch den Anschluß 24 abgezogen werden.

In der Figur 4 nicht dargestellt, aber leicht erkennbar ist eine Stellung des Leitungsstücks 25, das einerseits mit dem Abzugsrohr 21 des Deckels 14 in Verbindung steht und anderenends unmittelbar an die Gasabzugseinrichtung 29 anschließbar ist. Diese Phase ist insbesondere dann leicht einstellbar, wenn der Ofen als "normaler" Lichtbogenofen und wie bisher üblich in Betrieb ist und damit unabhängig von dem ggf. gestörten oder zu Reparaturzwecken herausgenommenen Chargierbehälters betrieben werden kann.

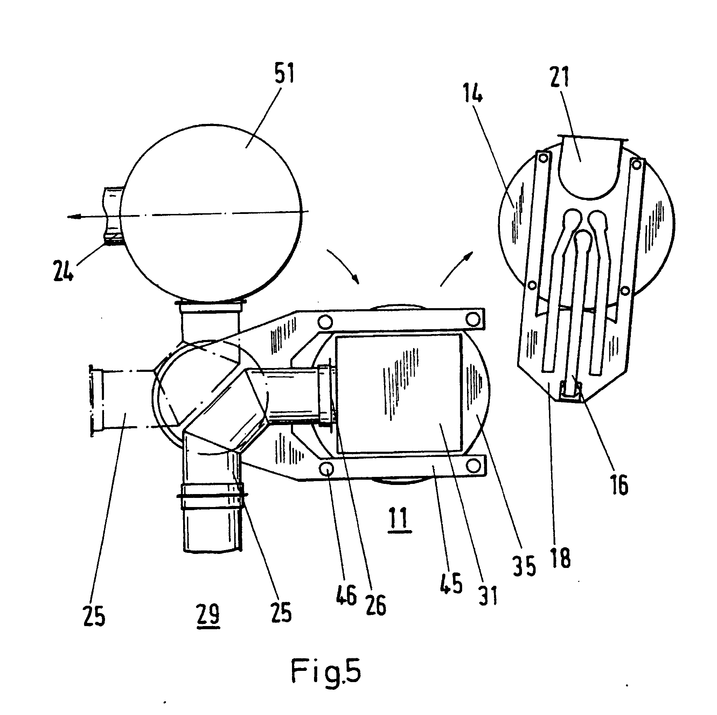

Die Figur 5 zeigt die gleichen Aggregate wie in der Figur 4, hier aber in der Stellung, in der die Charge in den Ofen geleitet wird. Im rechten Teil der Figur 5 ist der Deckel 14 vom Ofen 11 weggeschwenkt. Gleichzeitig ist die Chargiervorrichtung 31 von der Ablage 51 abgehoben und über das Ofengefäß 11 geschwenkt worden.

Während des Chargierens ist die Gasabzugseinrichtung 29 über das Leitungsstück 25 mit einem Rohrstutzen 26 verbunden, der in der Seitenwand der Chargiervorrichtung 31 angeordnet ist.

In der Figur 5 ist ein zweites (gestrichelte Linie) Leitungsstück 25 dargestellt. Dadurch sind beim Einsatz mehrerer Ablagen 51 verschiedene Gasführungsschaltungen gegeben, insbesondere für den konventionellen Ofenbetrieb ohne Einsatz der Chargiervorrichtung.

In der Figur 6 ist die Bewegungsvorrichtung 42 aus einer Hebevorrichtung 41 mit einer zwischen Rollen 49 geführten Bahn 48 aufgebaut. Von der Hebevorrichtung 41 führen Greifelemente 44 vom Oberteil 32 der Chargiervorrichtung 31.

In der Seitenwand der Chargiervorrichtung 31 ist eine Gaszufuhr 23 angebracht. Im Mündungsbereich 35 der Chargiervorrichtung 31 sind stangenförmige Elemente 39 vorgesehen, die den Boden 33 des Chargierbehälters 31 bilden.

Die Stangen 39 stützen sich im vorliegenden Fall auf einem Gitter 54 der Ablage 51 ab. Auf diese Weise können Stöße während des Chargierens des Chargierbehälters 31 abgefangen werden.

In der Ablage 51 ist im vorliegenden Fall im Boden der Anschluß 24 angeordnet.

Oberhalb des Chargierbehälters 33 befindet sich in der Figur 6 der Schrottkorb 71, der eine öffenbare Bodenklappe 72 besitzt.

Im rechten Teil des Bildes ist das Ofengefäß 11 dargestellt mit dem Untergefäß 12 und dem Obergefäß 13. Der Deckel 14 ist in der dargestellten Situation von der Deckelhebe- und -schwenkvorrichtung 18 einschließlich der am Elektrodenarm 16 befestigten Elektrode 15 mittels der Elektrodensäule 17 weggeschwenkt worden.

Die Figur 6 zeigt deutlich, daß der Schrottkorb 71 extrem tief in der nicht weiter dargestellten Stahlwerkshalle führbar ist, da die Chargiervorrichtung 31 an nahezu beliebiger Stelle neben dem Ofengefäß 11 plaziert werden kann.

### Positionsliste

### Schmelzen

- 11: Niederschachtofen
- 12: Untergefäß
- 13: Obergefäß
- 14: Deckel
- 15: Elektrode
- 16: Elektrodentragarm
- 17: Elektrodensäule
- 18: Deckelhebe- und -schwenkvorrichtung
- 19: Rand Ofenobergefäß

### Abziehen

- 21: Abzugsrohr am Ofendeckel
- 22: Schiebemuffe
- 23: Zuführrohr am Chargierbehälter
- 24: Anschluß Ablage
- 25: Leitungsstück (rechtwinklig)
- 26: Rohrstutzen
- 29: Gasabzugseinrichtung

### Chargieren

- 31: Chargiervorrichtung
- 32: Oberteil, Chargiervorrichtung
- 33: Boden des Chargierbehälter
- 34: Unterteil Chargiervorrichtung
- 35: Mündungsbereich Unterteil
- 36: Welle
- 37: Einarmiger Hebel
- 38: Deckel Chargiervorrichtung
- 39: Stangenförmige Elemente

### Heben/Schwenken

- 41: Hebevorrichtung
- 42: Bewegungsvorrichtung
- 43: Zentrale Säule
- 44: Greifelemente
- 45: Gabelförmiges Element
- 46: Hebelelement
- 47: Schwenkvorrichtung
- 48: Bahn
- 49: Rollen

### Ablage

- 51: Ablage
- 52: Rand der Ablage
- 53: Lanzen
- 54: Gitter

### Dämpfen

- 61: Dämpfungselemente
- 62: Feder
- 63: Arm

### Befüllen

- 71: Schrottkorb
- 72: Bodenklappe

- Lₘ: Mantellänge Ablage 51
- L_{c}: Gesamthöhe Chargiervorrichtung 31
- H_{E}: Gesamthöhe Niederschachtofen 11
- H_{S}: Gesamthöhe Schacht 13

## Patentansprüche

1. Beschickungseinrichtung für Niederschachtöfen, insbesondere für Lichtbogenöfen zum Erschmelzen von Schrott, die mit einem an eine Gasabzugseinrichtung angeschlossenen Deckel verschließbar sind, und auf denen nach Entfernen des Deckels vom Ofenschacht eine Chargiervorrichtung aufsetzbar ist, die ein Oberteil (32) und ein Unterteil (34) aufweist, wobei das Oberteil als Chargierbehälter (32) ausgestaltet ist, der einen gasdurchlässigen, öffenbaren Boden (33) besitzt,
das Unterteil (34) im Bereich seiner Mündung (35) in der Weise ausgestaltet ist,
dass sie mit dem oberen Rand (19) des Ofenobergefäßes (13) korrespondiert,
wobei ferner außerhalb des Niederschachtofens (11) eine Ablage (51) vorgesehen ist, auf der die Chargiervorrichtung (31) absetzbar ist und
die Ablage (51) einen Anschluß (24) aufweist, mit dem sie an die Gasabzugseinrichtung (29) anschließbar ist,
eine Hebevorrichtung (41) vorgesehen ist, mit der die Chargiervorrichtung (31) auf der Ablage (51) ablegbar und in eine Höhe geringfügig oberhalb des Niveaus des oberen Randes (19) des Ofenobergefäßes (13) hebbar ist, und
eine Bewegungsvorrichtung (42) vorgesehen ist, mit der die Chargiervorrichtung (31) zum Niederschachtofen (11) hin- und wegbewegbar ist,
wobei ferner die Bewegungsvorrichtung (42) als Schwenkvorrichtung (47) ausgestaltet ist, **dadurch gekennzeichnet, daß** das Niveau der Ablage (51) deutlich unter dem des oberen Randes (19) des Ofenobergefäßes (13) liegt, und das an der Schwenkvorrichtung (47) mindestens ein Leitungsstück (25) der Gasführung angeordnet ist, das in Draufsicht in einem rechten Winkel geführt und in folgende Stellungen verdrehbar ist, wobei die Leitungsenden des Leitungsstückes (25) folgende Vorrichtungen miteinander verbinden :
a) Niederschachtofen (11) mit Chargiervorrichtung (31)
b) Niederschachtofen (11) mit Gasabzugseinrichtung (29)
c) + d) Freier Anschluß.

2. Beschickungseinrichtung nach Anspruch 1,
**dadurch gekennzeichnet,**
**dass** die Mantellänge (Lₘ) der Ablage (51) eine Größe aufweist, dass sie in Summe mit der Gesamthöhe (L_{c}) der auf ihr aufgesetzten Chargiervorrichtung (31) kleiner ist als die Gesamthöhe (H_{E}) des Niederschachtofens (11).

3. Beschickungseinrichtung nach Anspruch 1,
**dadurch gekennzeichnet,**
**dass** der Chargiervorrichtung (31) zugewandte Rand (52) der Ablage (51) mit der Mündung (35) des Unterteils (34) der Chargiervorrichtung (31) korrespondiert.

4. Beschickungseinrichtung nach Anspruch 1,
**dadurch gekennzeichnet,**
**dass** das Oberteil (32) der Chargiervorrichtung (31) einen rechteckigen Querschnitt aufweist.

5. Beschickungseinrichtung nach Anspruch 4,
**dadurch gekennzeichnet,**
**dass** außerhalb der Flucht der Innenwandungen des Oberteils (32) der Chargiervorrichtung (31) an zwei gegenüberliegenden Seiten Wellen (36) vorgesehen sind, an denen einarmige Hebel (37) schwenkbar befestigt sind.

6. Beschickungseinrichtung nach Anspruch 4,
**dadurch gekennzeichnet,**
**dass** an der Mündung des einen rechteckigen Querschnitt aufweisenden Oberteils (32) der Chargiervorrichtung (31) stangenförmige Elemente (39) vorgesehen sind, die in die Chargiervorrichtung (31) einsteckbar oder aus ihr herausziehbar sind.

7. Beschickungseinrichtung nach Anspruch 1,
**dadurch gekennzeichnet,**
**dass** die Ablage (51) rohrförmig ausgestaltet ist und mit Lanzen (53) bestückt ist, über die Medien führbar sind, mit denen eine Nachverbrennung des Ofengases durchführbar ist.

8. Beschickungseinrichtung nach mindestens einem der o.g. Ansprüche,
**dadurch gekennzeichnet, dass** im Freiraum der Ablage (51) Dämpfungselemente (61) vorgesehen sind,
die mit den Spitzen der einarmigen Hebel (39) korrespondieren.

9. Beschickungseinrichtung nach Anspruch 8,
**dadurch gekennzeichnet,**
**dass** die Dämpfungselemente (61) aus seiner Feder (62) und einem schwenkbaren Arm (63) aufgebaut sind.

10. Beschickungseinrichtung nach Anspruch 1,
**dadurch gekennzeichnet,**
**dass** die Hebevorrichtung (41) in einer zentralen Säule (43) der Schwenkvorrichtung (47) angeordnet ist, und
**dass** Greifelemente (44) vorgesehen sind, mit denen die Chargiervorrichtung (31) an beliebigen Positionen gegriffen und abgesetzt werden kann.

11. Beschickungseinrichtung nach Anspruch 1,
**dadurch gekennzeichnet,**
**dass** an der Schwenkvorrichtung (47) ein gabelförmiges Element (45) vorgesehen ist, an dem mindestens drei Hebeelemente (46) angeordnet sind, mit denen die Chargiervorrichtung (31) angehoben und abgesetzt werden kann.

12. Beschickungseinrichtung nach einem der o.g. Ansprüche,
**dadurch gekennzeichnet,**
**dass** im Unterteil (34) der Chargiervorrichtung (31) ein Rohrstutzen (26) vorgesehen ist, der während der Absetzphase der Chargiervorrichtung (31) auf dem Niederschachtofen (11) mit der Abzugseinrichtung (29) in Verbindung bringbar ist.

## Claims

1. Charging device for low-pit furnaces, in particular arc furnaces for melting scrap, which can be closed by a cover connected to a gas exhaust device and on which a charging device can be placed once the cover has been removed from the furnace shaft, comprising an upper part (32) and a lower part (34), such that the upper part is designed as a charging container (32) which has a gas-permeable bottom (33) that can be opened, the lower part (34) being designed in the area of its opening (35) in such manner that it corresponds to the upper rim (19) of the upper chamber (13) of the furnace, and further, a resting position surface (51) is provided outside the low-pit furnace, on which the charging device (31) can be placed and the resting position surface (51) has a connection (24) by means of which it can be connected to the gas exhaust device (29), a lifting device (41) being provided, by which the charging device (31) can be placed on the resting position surface (51) and raised to a height slightly above the level of the upper rim (19) of the upper furnace chamber (13), and a movement device (42) is provided, by means of which the charging device (31) can be moved to and away from the low-pit furnace (11), and further, the movement device (42) is designed as a swivelling device (47),
**characterised in that**
the level of the resting position surface (51) is substantially lower than the upper rim (19) of the upper furnace chamber (13), and at least one duct section (25) of the gas duct is arranged on the swivelling device (47), which when viewed from above makes a right-angle and can be turned to the following positions, such that the duct ends of the duct section (25) connect the following devices to one another:
(a) the low-pit furnace (11) to the charging device (31),
(b) the low-pit furnace (11) to the gas exhaust device (29),
(c) and (d) free connections.

2. Charging device according to Claim 1,
**characterised in that**
the parapet length (Lₘ) of the resting position surface (51) is of a size such that, together with the total height (L_{c}) of the charging device (31) placed on it, it is smaller than the total height (H_{E}) of the low-pit furnace.

3. Charging device according to Claim 1,
**characterised in that**
the rim (52) of the resting position surface (51) facing towards the charging device (31) corresponds to the opening (35) of the lower part (34) of the charging device (31).

4. Charging device according to Claim 1,
**characterised in that**
the upper part (32) of the charging device (31) has a rectangular cross-section.

5. Charging device according to Claim 4,
**characterised in that**
outside the line of the inner walls of the upper part (32) of the charging device (31), on two opposite sides, shafts (36) are provided on which one-armed levers (37) are attached and able to swivel.

6. Charging device according to Claim 4,
**characterised in that**
on the opening of the upper part (32) of the charging device (31) having a rectangular corresponding, bar-shaped elements (39) are provided, which can be inserted into or withdrawn from the charging device (31).

7. Charging device according to Claim 1,
**characterised in that**
the resting position surface (51) is of tubular design and is fitted with lances (53) via which media can be delivered, by means of which afterburning of the furnace gas can be carried out.

8. Charging device according to at least one of the preceding claims,
**characterised in that**
in the free space of the resting position surface (51) damping elements (61) are provided, which correspond with the tips of the one-armed levers (39).

9. Charging device according to Claim 8,
**characterised in that**
the damping elements (61) consist ofa spring (62) and a swivelling arm (63).

10. Charging device according to Claim 1,
**characterised in that**
the lifting device (41) is arranged in a central column (43) of the swivelling device (47), and gripping elements (44) are provided, by means of which the charging device (31) can be gripped in any positions and lowered.

11. Charging device according to Claim 1,
**characterised in that**
a fork-shaped element (45) is provided on the swivelling device (47), on which at least three lifting elements (46) are provided, by means of which the charging device can be raised and lowered.

12. Charging device according to any of the preceding claims,
**characterised in that**
in the lower part (34) of the charging device (31) a section of tube (26) is provided, which can be brought into connection with the exhaust device (29) during the phase when the charging device (31) is being placed on the low-pit furnace (11).

## Revendications

1. Dispositif de chargement pour bas fourneaux, en particulier pour des fours à arc pour la fusion de riblons, qui sont obturables par un couvercle relié à un dispositif d'évacuation des gaz et sur lesquels peut être mis en place, après éloignement du couvercle du puits de four, un dispositif de chargement qui comporte une partie supérieure (32) et une partie inférieure (34), ladite partie supérieure étant conformée en récipient de chargement (32) qui possède un fond (33) ouvrant et perméable aux gaz et ladite partie inférieure (34) étant conformée, au voisinage de son ouverture (35) de façon qu'elle correspond au bord supérieur (19) de la carcasse supérieure du four (13), un dispositif de réception (51) étant de plus prévu à l'extérieur du bas fourneau (11) pour recevoir un dispositif de chargement (31), le dispositif de réception (51) présentant un raccord (24) grâce auquel il peut être relié au dispositif d'évacuation des gaz (29), un dispositif de levage (41) étant prévu grâce auquel le dispositif de chargement (31) peut être déposé sur le dispositif de réception et amené à une hauteur légèrement supérieure au niveau du bord supérieur (19) de la carcasse supérieure du four (13), un dispositif de déplacement (42) étant prévu pour déplacer le dispositif de chargement (31) en va-et-vient par rapport au bas fourneau (11) et étant conformé en dispositif basculant (47),
**caractérisé en ce que** le niveau du dispositif de réception (51) se trouve nettement en dessous de celui du bord supérieur (19) de la carcasse supérieure du four (13) et **en ce qu'**au moins une pièce de canalisation (25) de conduite de gaz est agencée sur le dispositif basculant (47), cette pièce de canalisation formant, en plan, un angle droit et pouvant être tournée dans des positions dans lesquelles les extrémités de ladite pièce de canalisation (25) relient ensemble les dispositifs suivants :
a) le bas fourneau (11) avec le dispositif de chargement (31),
b) le bas fourneau (11) avec le dispositif d'évacuation des gaz (29),
c) + d) communication libre.

2. Dispositif de chargement selon la revendication 1,
**caractérisé en ce que** la longueur (Lₘ) du manchon du dispositif de réception (51) est telle que, en addition avec la hauteur totale (L_{c}) du dispositif de chargement (31) en place sur ledit dispositif de réception, elle est plus petite que la hauteur totale (H_{E}) du bas fourneau (11).

3. Dispositif de chargement selon la revendication 1,
**caractérisé en ce que** le bord (52) du dispositif de réception (51), tourné vers le dispositif de chargement (31), correspond à l'ouverture (35) de la partie inférieure (34) dudit dispositif de chargement (31).

4. Dispositif de chargement selon la revendication 1,
**caractérisé en ce que** la partie supérieure (32) du dispositif de chargement (31) présente une section rectangulaire.

5. Dispositif de chargement selon la revendication 4,
**caractérisé en ce que** des arbres (36) sont prévus en dehors de l'alignement des parois internes de la partie supérieure (32) du dispositif de chargement (31), sur deux côtés opposés, arbres sur lesquels sont montés basculants des leviers à bras unique (37).

6. Dispositif de chargement selon la revendication 4,
**caractérisé en ce que** des éléments (39) en forme de barre sont prévus à l'ouverture de la partie supérieure (32) du dispositif de chargement (31) présentant une section rectangulaire, ces éléments pouvant être mis en place et retirés du dispositif de chargement (31).

7. Dispositif de chargement selon la revendication 1,
**caractérisé en ce que** le dispositif de réception (51) présente la forme d'un tube et comporte des lances (53), grâce auxquelles on peut amener des fluides pour la post-combustion des gaz du four.

8. Dispositif de chargement selon l'une des revendications précédentes,
**caractérisé en ce que** des éléments d'amortissement (61) sont prévus dans le volume libre du dispositif de réception (51), en correspondance avec les pointes des leviers à bras unique (37).

9. Dispositif de chargement selon la revendication 8,
**caractérisé en ce que** les éléments d'amortissement (61) comportent un ressort (62) et un bras basculant (63).

10. Dispositif de chargement selon la revendication 1,
**caractérisé en ce que** le dispositif de levage (41) est agencé dans une colonne centrale (43) du dispositif basculant (47) et **en ce que** sont prévus des éléments de préhension (44), grâce auxquels le dispositif de chargement (31) peut être saisi et déposé à des positions souhaitées.

11. Dispositif de chargement selon la revendication 1,
**caractérisé en ce que**, sur le dispositif basculant (47), est prévu un élément (45) en forme de fourche sur lequel sont agencés au moins trois éléments de levage (46), grâce auxquels le dispositif de chargement (31) peut être levé et déposé.

12. Dispositif de chargement selon une des revendications précédentes,
**caractérisé en ce qu'**un manchon tubulaire (26) est prévu à la partie inférieure (34) du dispositif de chargement (31), ce manchon (26) pouvant être relié au dispositif d'évacuation des gaz (29) pendant la phase d'appui du dispositif de chargement (31) sur bas fourneau (11).
